Europäisches Patentamt

European Patent Office

Office européen des brevets

(19)

(11) Veröffentlichungsnummer: **0 158 917 B1**

# (12) EUROPÄISCHE PATENTSCHRIFT

(45) Veröffentlichungstag der Patentschrift: **04.09.91**

(21) Anmeldenummer: **85103936.2**

(22) Anmeldetag: **01.04.85**

(51) Int. Cl.⁵: **B01D 3/28**, B01D 53/18, F28F 25/08

(54) **Einbauelement für Stoff- oder Wärmeaustauschkolonnen.**

(30) Priorität: **14.04.84 DE 3414267**

(43) Veröffentlichungstag der Anmeldung:
**23.10.85 Patentblatt 85/43**

(45) Bekanntmachung des Hinweises auf die
Patenterteilung:
**04.09.91 Patentblatt 91/36**

(84) Benannte Vertragsstaaten:
**DE FR GB IT**

(56) Entgegenhaltungen:
EP-A- 0 130 745    DE-A- 1 913 016
DE-A- 2 060 178    DE-A- 2 516 078
DE-A- 2 601 890    DE-A- 2 722 424
DE-A- 2 818 557    DE-B- 1 124 981
DE-B- 1 129 456    DE-B- 1 253 673
DE-B- 1 283 250    DE-U- 7 804 885
US-A- 3 785 620    US-A- 4 427 606

(73) Patentinhaber: **Raschig Aktiengesellschaft
Mundenheimer Strasse 100
W-6700 Ludwigshafen/Rhein(DE)**

(72) Erfinder: **Braun, Roland, Dipl.-Ing.
Hirschhornstrasse 18
W-6700 Ludwigshafen-Rheingönheim(DE)**

(74) Vertreter: **Hubbuch, Helmut, Dipl.-Ing et al
Patentanwälte Dr. Rudolf Bauer Dipl.-Ing.
Helmut Hubbuch Dipl.-Phys. Ulrich Twelmeier Westliche Karl-Friedrich-Strasse 29-31
W-7530 Pforzheim(DE)**

Rank Xerox (UK) Business Services

## Beschreibung

Die Erfindung betrifft ein Einbauelement für Stoff- oder Wärmeaustauschkolonnen bei Gas- und/oder Flüssigkeitsströmen, insbesondere im Gegenstromverfahren, wie solche für Destillations-, Rektifikations- und Absorptionstürme verwendet werden.

Man kennt solche Einbauelemente, welche für systematisch aufgebaute Packungen bei Stoff- und Wärmeaustauschkolonnen verwendet werden, wobei die Einbauelemente aus in Strömungsrichtung aufrecht angeordneten Lamellen mit Wellungen oder Faltungen bestehen, welche Wellungen oder Faltungen winklig zur Strömungsrichtung liegen und bei gepackten Lamellen sich einander kreuzend berühren. Hierbei hat man bei solchen Pakkungen nach der CH-PS 608 380 die Lamellen schon mit Löchern versehen und weiter nach der DE-PS 27 22 424 das Lamellenmaterial auch schon feingeriffelt. Sowohl die Lochungen als auch die Feinriffelung sollen das Durchströmungsverhalten als auch den Stoff- und/oder Wärmeaustausch solcher Kolonnen verbessern. Die Fertigung solcher feingeriffelten Bleche ist aufwendig.

Desweiteren finden nach der DE-OS 28 18 557 eingeschnittene Zungen Verwendung, wobei hier in Folge einer durchlaufenden Schlitzung getrennte Halblamellen entstehen, die zusätzlicher Halterungsmittel bedürfen; zudem sollen die Zungen bei durchströmenden Medien in Schwingungen geraten. Nach der DE-AS 25 16 078 sind Ausschnitte mit ausgestellten Lappen vorgesehen; diese erhöhen die Druckverluste, und zudem ist hier eine aufwendige Lamellenhalterung vorzusehen. Auch bei der DE-A-2060 178 sind solche Lappen aus gestellt, bei Verwendung von Streckmaterial als frund material.

Desweiteren ist es nach der prioritätsälteren EP-PS 0 130 745 bekannt, solche Lamellen als Einbauelemente in Packungen für Stoff- und Wärmeaustauschkolonnen aus Streckmaterial zu versehen. Hierbei wird das Material nach dem Einbringen der Schlitze durch Ziehen gestreckt, wobei sich die Schlitze ungleichförmig öffnen. Bei anschließenden Wellen oder Falten liegen die Schlitze teilweise auf den Wellen- bzw. Faltentälern oder -Bergen, was zu weiterer ungleichförmiger Öffnung der Schlitze führt. Hierdurch ergibt sich keine gleichmäßige Verteilung der Gas- und/oder Flüssigkeitsströme, vielmehr herrscht eine willkürliche Verteilung mit unterschiedlichen Druckverlusten vor, sowie eine sich laufend ändernde Geometrie der Oberfläche, was nicht optimal zu steuern ist.

Es ist nun Aufgabe der Erfindung, Einbauelemente für diese Zwecke zu schaffen, bei denen sich die Wirksamkeit bei niedrigen Druckverlusten weiter erhöhen läßt, was durch eine gezielte, optimale Verteilung der Gas- und/oder Flüssigkeitsströme erreicht wird und überdies eine wenig aufwendige Fertigung erlaubt.

Zur Lösung dieser Aufgabe kennzeichnet sich das Einbauelement nach dem Oberbegriff nach Anspruch 1 gemäß der Erfindung dadurch, daß schmale Schlitze in regelmäßigen Abständen übereinander angeordnet sind, daß die Schlitze jeweils auf Flanken der Wellungen oder Faltungen liegen, während die Ränder der Wellen- oder Faltentäler und -Berge ungeschlitzt sind, daß auf der einen Seite der Schlitze die Schlitzwandungen aus der Lamellenebene herausgedrückt sind und zwar nur so weit, daß die Kapillarwirkung der Schlitze noch erhalten bleibt.

Hierdurch wird eine gleichmäßige und damit optimale Verteilung der entgegengesetzten Ströme für den Mediumaustausch erreicht mit gleichbleibender Kapillarwirkung für die auftreffende Flüssigkeit zur Verteilung über den gesamten Schlitzbereich. Eine solche Anordnung ergibt eine überraschend hohe Wirksamkeit bei geringen Druckverlusten, wobei sich ein niedriger spezifischer Druckverlust-Quotient von Druckverlust - theoretischer Trennwirkung (Bodenzahl) - ergibt und zwar bei einer wenig aufwendigen Ausführung. Die als Kapillaren wirkenden Schlitze verziehen auftreffende Tropfen praktisch ohne Druckverluste und ergeben auf einfache Weise eine weitgehende Oberflächenbenetzung der Lamellen.

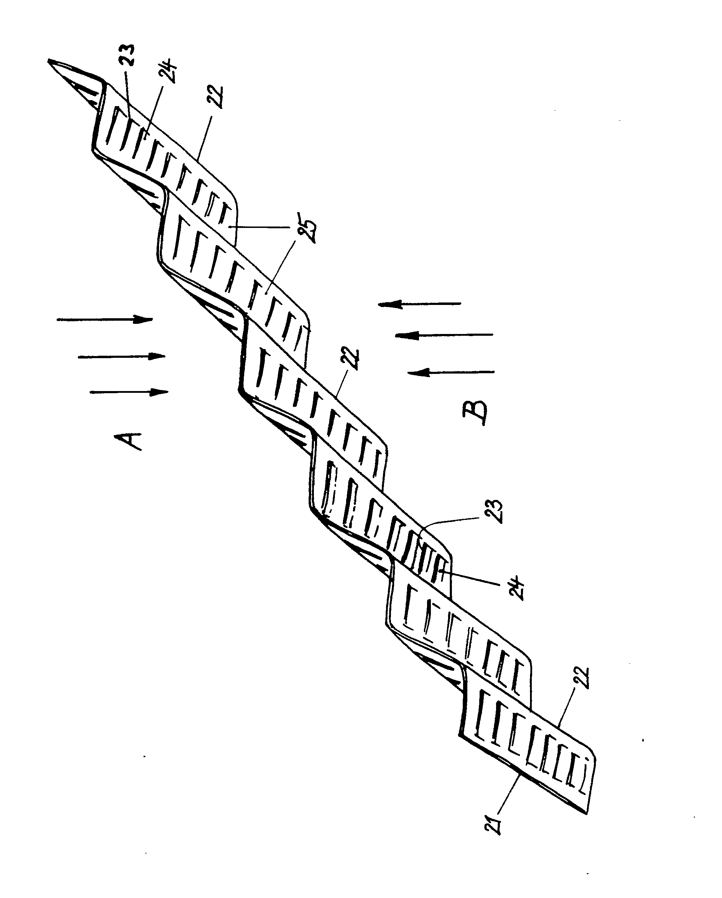

In der Zeichnung ist ein Einbauelement für Stoff- oder Wärmeaustauschkolonnen als bevorzugtes Ausführungsbeispiel dargestellt und nachfolgend beschrieben und zwar ist gezeigt die perspektivische Darstellung einer Lamellenausführung gemäß der Erfindung.

Hierbei ist in der Zeichnung eine gewellte Lamelle 21 mit Wellen 22 winklig zur Strömungsrichtung A und B dargestellt, wobei bei gepackten Lamellen sich dieselben an den Wellungen oder Faltungen einander kreuzend berühren. Hier sind in die Lamelle 21 Schlitze jeweils mit Öffnung 23 nach oben eingebracht, wofür die Schlitzwandungen 24 mit Prägestempel jeweils etwas schräg eingedrückt sind und zwar nur soweit, daß eine Kapillarwirkung erhalten wird. Im übrigen liegen die Schlitzöffnungen 23 auf den Flanken 25 der Wellungen, wobei die Wellentäler 21 und -Berge 22 ungeschlitzt bleiben.

Auch können die übereinanderliegenden Schlitze von Flanke zu Flanke der Wellungen oder Faltungen sich wechselweise nach vorne oder hinten öffnen. Bei Edelstahl beträgt die Materialstärke der Lamellen zweckmäßigerweise 0,2 mm und C-Stahl 0,3 mm.

## Patentansprüche

1. Einbauelement für Stoff- oder Wärmeaustauschkolonnen bei Gas- und/oder Flüssigkeitsströmen, insbesondere im Gegenstromverfahren, wobei die Einbauelemente aus in Strömungsrichtung aufrecht angeordneten Lamellen mit Wellungen oder Faltungen bestehen, welche Wellungen oder Faltungen winklig zur Strömungsrichtung liegen und bei gepackten Lamellen sich einander kreuzend berühren, wobei Schlitze in den Lamellen angebracht sind,
dadurch gekennzeichnet, daß schmale Schlitze in regelmäßigen Abständen übereinander angeordnet sind, daß die Schlitze jeweils auf Flanken der Wellungen oder Faltungen liegen, während die Ränder der Wellen- oder Faltentäler und -Berge ungeschlitzt sind, daß auf der einen Seite der Schlitze die Schlitzwandungen aus der Lamellenebene herausgedrückt sind und zwar nur so weit, daß die Kapillarwirkung der Schlitze noch erhalten bleibt.

2. Einbauelement nach Anspruch 1,
dadurch gekennzeichnet, daß die Schlitze regelmäßig von Flanke zu Flanke der Wellungen oder Faltungen wechselweise nach vorne oder hinten geöffnet sind.

3. Einbauelement nach Anspruch 1 oder 2,
dadurch gekennzeichnet, daß die Schlitze regelmäßig mit sich nach oben öffnender Schlitzung angeordnet sind.

## Claims

1. Insertion element for material or heat exchanging columns in gas or liquid currents, in particular in counter-current processes, whereby the insertion elements consist of slats with waves or corrugations arranged upright in the direction of flow, said waves or corrugations lying at an angle to the direction of flow and, in the case of packed slats, touching each other intersectingly, whereby slits are provided in the slats,
characterised in that narrow slits are arranged at regular intervals above one other, in that the slits are situated in each case on flanks of the waves or corrugations, while the edges of the troughs and peaks of the waves or corrugations are unslitted, in that on the one side of the slits the slit walls are pushed out of the slat plane only far enough for the capillary effect of the slits to be preserved.

2. Insertion element according to Claim 1,
characterised in that the slits are opened regularly from flank to flank of the waves or corrugations alternately towards the front or the back.

3. Insertion element according to claim 1 or 2,
characterised in that the slits are arranged regularly with the slit opening upwards.

## Revendications

1. Elément encastrable pour colonnes de transfert de matières ou d'échange de chaleur pour des écoulements de gaz et/ou de liquides, en particulier dans le procédé à contre-courant, les éléments encastrables étant constitués par des lamelles avec des ondulations ou pliages disposés verticalement dans la direction d'écoulement, lesquels ondulations ou pliages sont orientés sous un angle par rapport à la direction d'écoulement et se touchent en se croisant dans le cas de lamelles tassées, lesdites lamelles étant munies de fentes, caractérisé en ce que d'étroites fentes sont disposées à des intervalles réguliers les unes au-dessus des autres; que les fentes se situent respectivement sur des flancs des ondulations ou pliages, tandis que les bords des creux et sommets des ondulations ou pliages sont dépourvus de fentes; que sur l'un des côtés des fentes les parois des fentes sont repoussées hors du plan des lamelles, à savoir de telle façon que la capillarité des fentes reste encore conservée.

2. Elément encastrable selon la revendication 1, caractérisé en ce que les fentes sont ouvertes alternativement, de manière régulière d'un flanc à l'autre des ondulations ou pliages, vers l'avant ou vers l'arrière.

3. Elément encastrable selon l'une des revendications 1 ou 2, caractérisé en ce que les fentes sont disposées de manière régulière avec l'ouverture vers le haut.